# EUROPÄISCHE PATENTSCHRIFT

(11) **EP 1 167 755 B1**
(45) Veröffentlichungstag und Bekanntmachung des Hinweises auf die Patenterteilung: **02.12.2015**
(21) Anmeldenummer: 01115170.1
(22) Anmeldetag: 22.06.2001
(51) Int. Cl.: F03D 7/02, F03D 11/00

(54) **Arretiervorrichtung für den Rotor einer Windkraftanlage**
Locking device for the rotor of a wind turbine
Dispositif de blocage pour le rotor d'une éolienne

(30) Priorität: 28.06.2000 DE 10031472
(43) Veröffentlichungstag der Anmeldung: 02.01.2002
(73) Patentinhaber: GENERAL ELECTRIC COMPANY, Schenectady, NY 12345 (US)
(72) Erfinder: Uphues, Ulrich, 48431 Rheine (DE)
(74) Vertreter: Zimmermann & Partner Patentanwälte mbB

(56) Entgegenhaltungen:
- GB-A- 555 439
- US-A- 5 157 983
- US-A- 6 000 489
- HAU E: "Windkraftanlagen" WINDKRAFTANLAGEN, XX, XX, 1996, Seiten 248-249, XP002334015

## Beschreibung

Die Erfindung betrifft eine Vorrichtung zur Arretierung einer von einem Rotor angetriebenen Welle einer Windkraftanlage.

Aus Sicherheitsgründen ist es erforderlich, den Rotor gegen unbeabsichtigte Verdrehungen festzustellen. Dazu wird im Stand der Technik derart verfahren, dass eine mit der Scheibe verbundene Welle mittels eines Arretierelements festgelegt wird. Bei dieser Scheibe handelt es sich um die Bremsscheibe einer Feststell-Scheibenbremse als Teil des Bremssystems der Windkraftanlage. In die Bremsscheibe sind axiale oder radiale Bohrungen eingebracht, in die ein Arretierbolzen einführbar ist. Der Arretierbolzen ist an einem Führungsteil bewegbar gelagert, das seinerseits an einem Bauteil der Windkraftanlage mit Ausnahme der Scheibe oder eines anderen mit der Welle verbundenen Teils angebracht ist (siehe z. B. HAU E: "Windkraftanlagen", Springer Verlag, 1996, Seiten 248-249, XP002334015).

Die Scheibe der bekannten Windkraftanlage lässt sich lediglich dann feststellen, wenn eine ihrer Bohrungen dem Arretierbolzen genau gegenüberliegt. Die Einnahme dieser Scheibenposition ist mitunter problematisch. So lässt sich die Scheibe bei nicht dem Arretierbolzen gegenüberliegender Bohrung durch kurzzeitiges Lösen der Feststellbremse verdrehen. Dabei ist das Ausmaß der Verdrehung jedoch kaum kontrollierbar, so dass die Arretierposition der Scheibe nach dem Prinzip "Try and Error" gefunden werden muss.

Aus US-A-6,000,489 ist eine Lenkradsperre für Fahrzeuge bekannt, bei der ein auf der Lenksäule angeordnetes Ritzel mit einem eine Verzahnung aufweisenden Sperrelement blockiert wird. US-A-5,157,983 beschreibt ein Getriebe, bei dem ein mit einem Zahnrad des Getriebes kämmendes Ritzel durch in dieses eingreifende Stifte, Bolzen oder dergleichen gegen eine Verdrehung blockiert werden kann.

Der Erfindung liegt die Aufgabe zugrunde, eine verbesserte Arretiervorrichtung für den Rotor einer Windkraftanlage zu schaffen, bei der die Sperrung bzw. Arretierung der Scheibe bedienerfreundlicher erfolgen kann.

Zur Lösung dieser Aufgabe wird mit der Erfindung eine Vorrichtung zur Arretierung einer von einem Rotor angetriebenen Welle einer Windkraftanlage vorgeschlagen, die versehen ist mit den Merkmalen des Anspruchs 1, Einzelne Ausführungsbeispiele der Erfindung sind Gegenstand der Unteransprüche.

Bei der erfindungsgemäßen Vorrichtung wird eine Zahnscheibe verwendet, die mit der Welle der Windkraftanlage verbindbar ist. Diese Zahnscheibe weist an ihrem Umfangsrand zumindest über einen Teil desselben Zähne auf. Das Arretierelement ist mit einem Vorsprung versehen, der bei Bewegung des Arretierelements in dessen Arretierungsposition zwischen zwei Zähne der Zahnscheibe eintaucht. Anstelle eines Vorsprungs kann das Arretierelement auch mehrere Vorsprünge aufweisen. Diese mehreren Vorsprünge sind dann nach Art von Zähnen ausgebildet, die mit der Zahnung der Zahnscheibe kämmen. Auch bei Vorhandensein lediglich eines Vorsprungs am Arretierelement weist dieses zweckmäßigerweise die Form eines Zahns auf, der mit zwei Zähnen der Zahnscheibe kämmt.

Durch die Zahnung am Umfang der Zahnscheibe existieren nun eine viel größere Zahl potenziellen Zahnscheibenpositionen, in denen die Zahnscheibe arretiert werden kann. Damit vereinfacht sich der Vorgang des Sperrens der Welle, was bediener- und montagefreundlich ist und sich nicht zuletzt auch kostengünstig im Hinblick auf eine Reduzierung der Montagekosten auswirkt. Die Zähne der Zahnscheibe können sich über den gesamten Umfangsrand erstrecken. Die Zahnscheibe kann darüber hinaus eine Schrägverzahnung aufweisen. Die einzelnen Zähne der Zahnscheibe können entweder radial oder unter einem spitzen Winkel zur Radialerstreckung von der Zahnscheibe abstehen. Insbesondere können die Zähne auch axial von der Zahnscheibe abstehen. Das Arretierelement ist bezüglich der Ausbildung seines mindestens einen Vorsprungs entsprechend der Zahnung der Zahnscheibe ausgebildet und lässt sich je nach Ausrichtung der Zähne der Zahnscheibe in radialer, schräg zur radialen Richtung verlaufender oder axialer Richtung auf die Zahnscheibe zu und von dieser weg bewegen. Vorteilhafterweise ist das Arretierelement in seiner Arretierungsposition und in seiner Freigabeposition gegen unbeabsichtigte Bewegungen gesichert. Dadurch wird verhindert, dass das Arretierelement aufgrund von Vibrationen diese beiden Positionen unbeabsichtigt verlässt.

Das Arretierelement ist zweckmäßigerweise linear in dem Führungsteil geführt. Die lineare Verschiebung erfolgt zweckmäßigerweise mit Hilfe einer Handkurbel, was den Bedienungskomfort erhöht.

Als Zahnscheibe für die erfindungsgemäße Arretiervorrichtung wird zweckmäßigerweise die bei Windkraftanlagen überwiegend vorhandene Bremsscheibe verwendet. Diese Bremsscheibe ist demzufolge als Zahnscheibe ausgeführt und übernimmt neben der Abbremsfunktion auch die Feststellfunktion der Welle. Die Kombination beider Systeme (Feststellbremse und Arretiervorrichtung) führt zu einer platzsparenden und kostengünstigen Anordnung.

Wegen des geringeren Drehmoments der sogenannten "schnellen" Welle des Treibstrangs der Windkraftanlage ist es von Vorteil, wenn die Zahnscheibe auf der zwischen dem Getriebe und dem Generator angeordneten Welle angeordnet ist. Dann nämlich braucht die Arretiervorrichtung weniger große Drehmomente aufzunehmen und kann entsprechend dimensioniert und damit weniger aufwendig ausgebildet sein.

Nachfolgend wird anhand der Figuren ein Ausführungsbeispiel der Erfindung näher erläutert. Im einzelnen zeigen:
- Fig. 1: in Seitenansicht eine Windkraftanlage zur Verdeutlichung der Position innerhalb des Maschinengehäuses, an der die erfindungsgemäße Arretiervorrichtung anzubringen ist,
- Fig. 2: eine Ansicht entlang der Linie II-II der Fig. 1 auf die Feststell-Scheibenbremse mit Umfangszahnung zum wahlweisen Feststellen oder Drehen der Bremsscheibe, wobei in Fig. 2 neben der Feststell-Scheibenbremse die Vorrichtung zur Arretierung der Bremsscheibe dargestellt ist,
- Fig. 3: eine Darstellung ähnlich der gemäß Fig. 2 jedoch mit aufgeschnittener Arretiervorrichtung,
- Fig. 4: einen Schnitt durch die Arretiervorrichtung gemäß IV-IV der Fig. 2,
- Fig. 5: eine Darstellung ähnlich der in Fig. 2 jedoch mit an der Arretiervorrichtung befestigter Vorrichtung zum Drehen der Bremsscheibe und
- Fig. 6: eine Darstellung auf die Bremsscheibe mit Drehvorrichtung gemäß dem Pfeil VI der Fig. 5.

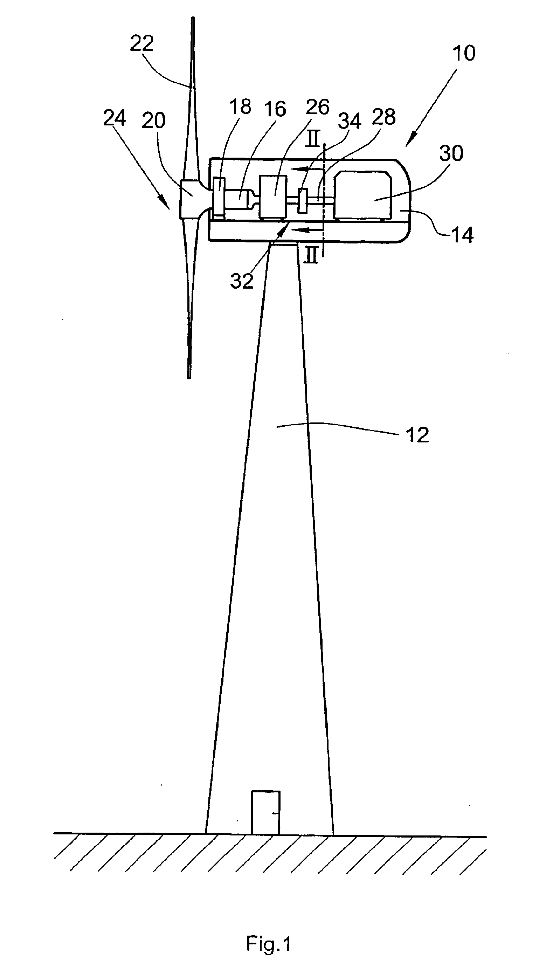

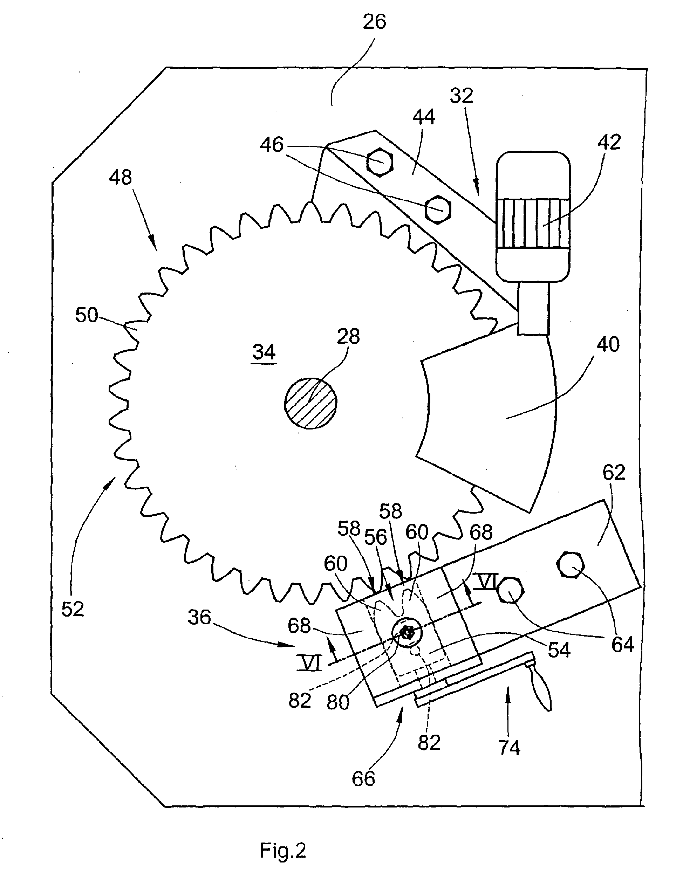

Fig. 1 zeigt in Seitenansicht eine Windkraftanlage 10 mit einigen ihrer wesentlichen Baugruppen. Die Windkraftanlage 10 weist einen Turm 12 auf, auf dem um eine Vertikalachse drehbar gelagert ein Maschinengehäuse 14 (Gondel) angeordnet ist. Innerhalb des Maschinengehäuses 14 ist die so genannte "langsame" Welle 16 über ein Wellenlager 18 drehbar gelagert. An der Welle 16 ist die Nabe 20 eines mehrere Rotorblätter 22 aufweisenden Rotors 24 angebracht. Die "langsame" Welle 16 ist mit einem Getriebe 26 verbunden, das im Maschinengehäuse 14 untergebracht ist. Das Getriebe 26 ist über die so genannte "schnelle" Welle 28 mit einem Generator 30 verbunden. Auf der Welle 28 befindet sich eine Feststell-Scheibenbremse 32 mit einer Bremsscheibe 34. Bei diesem Ausführungsbeispiel der Windkraftanlage 10 ist die Scheibenbremse mit einer Vorrichtung 36 zum Arretieren der Bremsscheibe 34 und mit einer Vorrichtung 38 zum Verdrehen der Bremsscheibe 34 kombiniert. Diese Vorrichtungen werden nachfolgend anhand der Fign. 2 bis 6 erläutert.

In den Fign. 2 bis 4 ist die Vorrichtung 36 zum Arretieren der Bremsscheibe 34 dargestellt. Ferner sind in den Figuren auch einige Einzelheiten der Scheibenbremse 32 zu erkennen. Diese Scheibenbremse 32 weist zwei Bremsbacken 40 auf (in den Figuren ist lediglich eine dieser beiden Bremsbacken zu erkennen), die mittels einer Anpressvorrichtung 42 axial auf die Bremsscheibe 34 zu- und wegbewegbar sind. Diese Komponenten der Scheibenbremse 32 sind an einem Halteelement 44 angebracht, das über die Schrauben 46 an dem Gehäuse des Getriebes 26 befestigt ist.

Die Bremsscheibe 34 ist an ihrem Umfang 48 mit einer Zahnung 50 versehen. Diese Zahnung 50 besteht aus einer Vielzahl von radial abstehenden Zähnen. Insoweit handelt es sich bei der Bremsscheibe 34 um eine Zahnscheibe 52. Mit den Zähnen 50 dieser Zahnscheibe 52 wirkt ein Arretierelement 54 zusammen, das radial auf die Zahnscheibe 52 zu und von dieser weg bewegbar ist. Das Arretierelement 54 weist an seinem der Zahnscheibe 52 gegenüberliegenden Ende 56 zwei Vorsprünge 58 auf, die nach Art von Zähnen 60 ausgebildet sind, welche zwischen die Zähne 50 der Zahnscheibe 52 eintauchen können. In Fig. 2 ist das Arretierelement 54 in gestrichelten Linien und in seiner Freigabeposition dargestellt, in der es außer Eingriff mit der Zahnscheibe 52 steht.

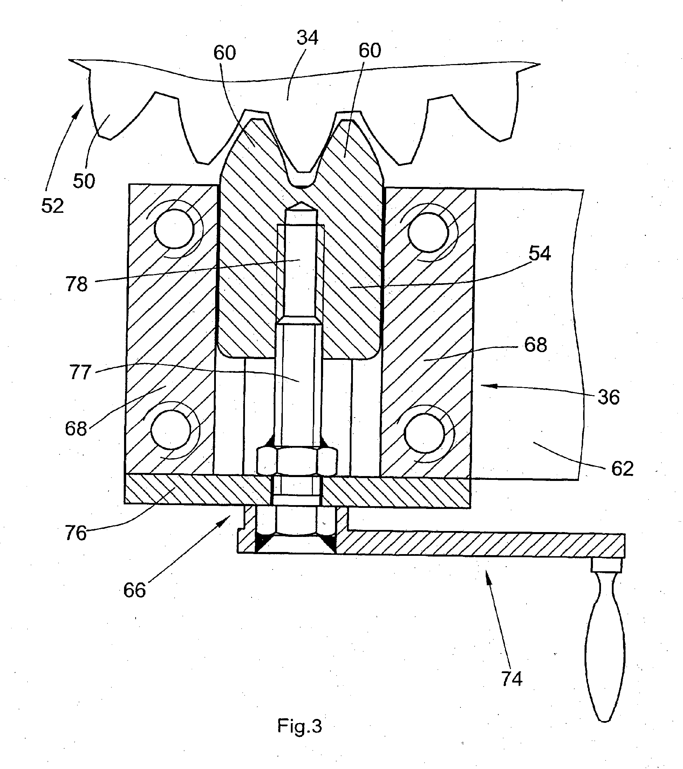

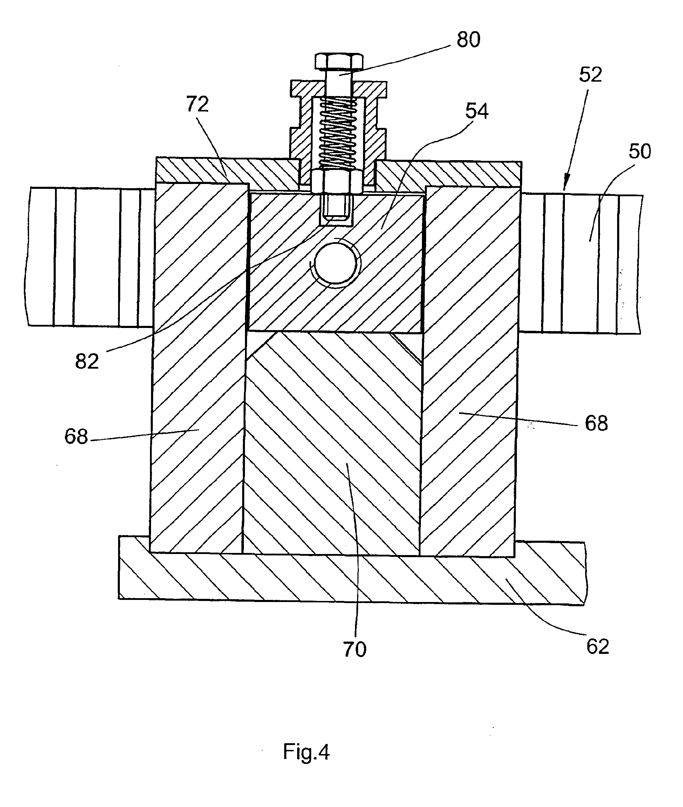

Fig. 3 zeigt die Arretierungsposition des Arretierelements 54, in der seine Zähne 60 zwischen die Zähne 50 der Zahnscheibe 52 eingetaucht sind. Ferner zeigen Fig. 3 und 4 verschiedenen Schnittansichten zur Verdeutlichung des Aufbaus der Arretiervorrichtung 36.

Die Arretiervorrichtung 36 ist mit einem Montageteil 62 versehen, das über die Schrauben 64 an dem Gehäuse des Getriebes 26 befestigt ist. Auf dem Montageteil 62 befindet sich ein Führungsteil 66, das aus zwei Seitenteilen 68 und einem gegenüber diesen beiden Seitenteilen 68 zurückspringenden Mittelteil 70 besteht. Die beiden Seitenteile 68 sind über ein Deckelteil 72 miteinander verbunden. In dem sich zwischen den Teilen 68 bis 72 ergebenden Raum ist das Arretierelement 54 radial zur Zahnscheibe 52 geführt. Die Bewegung des Arretierelements 54 erfolgt mit Hilfe einer Handkurbel 74, die an einer rückwärtigen Platte 76 des Führungsteils 66 drehbar gelagert ist. Mit Hilfe der Handkurbel 74 lässt sich eine mit einem Außengewinde versehene Welle 77 verdrehen, die in Gewindeeingriff mit einer Innengewindebohrung 78 des Arretierelements 54 steht. Durch Drehen der Handkurbel 74 wird demzufolge das Arretierelement 54, das auf Grund seiner rechteckigen Querschnittsform gegen Verdrehungen gesichert im Führungsteil 66 angeordnet ist, vor- und zurückbewegt.

Wie anhand von Fig. 4 zu erkennen ist, lässt sich das Arretierelement 54 mittels eines federbelasteten Feststellbolzens 80 sowohl in seiner Arretierungsposition als auch in seiner Freigabeposition am Führungsteil 66 bzw. an dessen Deckelteil 72 festlegen. Dadurch wird verhindert, dass es durch Erschütterungen zu einer ungewollten Verdrehung der Handkurbel 74 und damit zu einer Bewegung des Arretierelements 54 kommt. Der federbelastete Feststellbolzen 80 greift eine von zwei Aufnahmebohrungen 82 im Arretierelement 54.

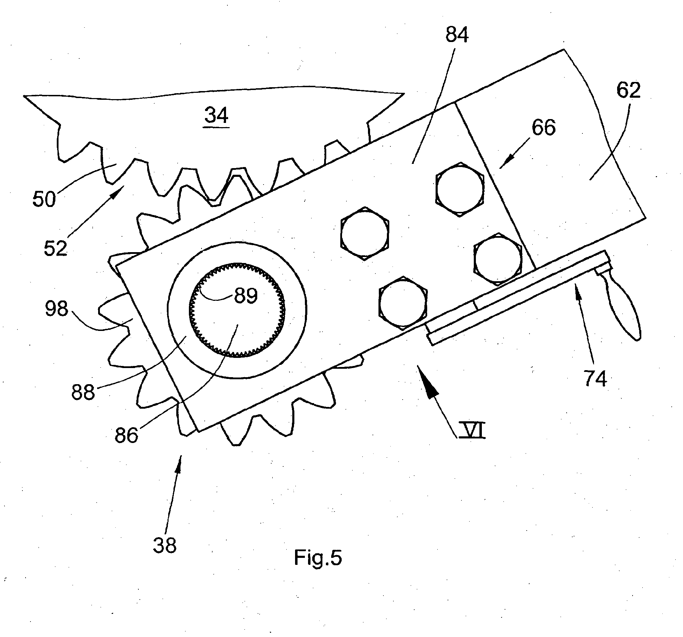

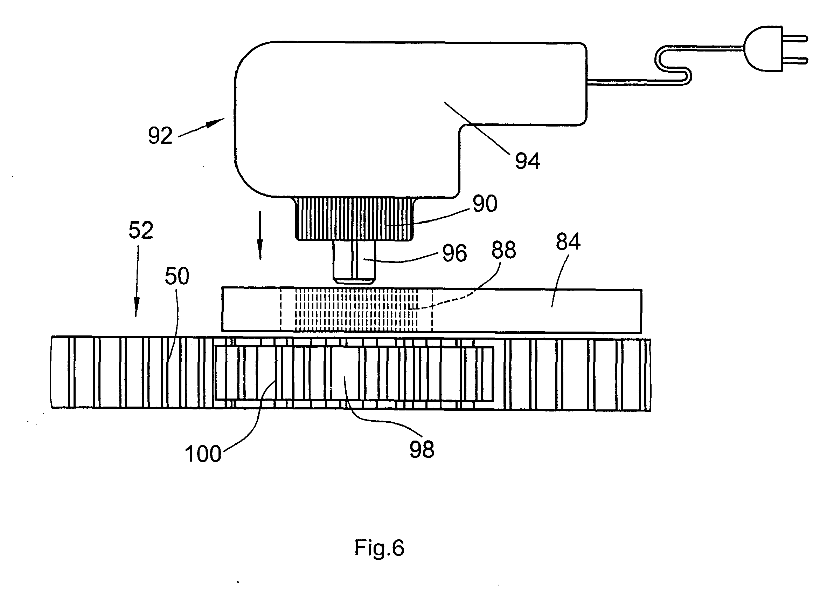

Fig. 5 und 6 zeigen den Anbau der Vorrichtung 38 zum Verdrehen der Brems- bzw. Zahnscheibe 34,52 an dem Führungsteil 66. Zu diesem Zweck wird das Deckelteil 72 mit dem Feststellbolzen 80 vom Führungsteil 66 entfernt und ein plattenförmiges Halteteil 84 mit den Seitenteilen 68 des Führungsteils 66 verschraubt. Dieses Halteteil 84 weist eine radial auswärts der Zahnung 50 der Zahnscheibe 52 angeordnete Durchgangsöffnung 86 mit einem Ring 88 mit Innenverzahnung 89 auf. In die Durchgangsöffnung 86 ist ein Außenverzahnungselement 90 eines elektrisch betriebenen Drehmomentschraubers 92 einsetzbar, mit dessen Gehäuse 94 das Außenverzahnungselement 90 fest verbunden ist. Koaxial zum Außenverzahnungselement 90 verläuft die Antriebswelle 96, deren Kupplungsende in diesem Fall als Außenvierkant ausgebildet ist. Auf die Antriebswelle 96 ist ein Ritzel 98 aufgesteckt, dessen Zähne 100 mit der Verzahnung 50 der Zahnscheibe 52 kämmen. Das Ritzel 98 ist gegen ein unbeabsichtigtes Ablösen von der Antriebswelle 96 auf dieser gelagert. Dies erfolgt beispielsweise durch eine radiale Verschraubung, Verstiftelung, Verbolzung o.dgl.

Bei Betrieb des Drehmomentschraubers 92 dreht sich das Ritzel 98, welches infolge dessen die Bremsscheibe 34 drehend antreibt. Somit lässt sich der mit der Welle 28 über das Getriebe 26 und die Welle 16 gekoppelte Rotor 24 mit Hilfe des Drehmomentschraubers 92 in die für die Montage bzw. Auswechslung der Rotorblätter jeweils erforderliche Stellung verdrehen.

## Patentansprüche

1. Vorrichtung zur Arretierung einer von einem Rotor angetriebenen Welle einer Windkraftanlage, mit
- einer Scheibe, die mit der Welle verbindbar ist, und
- einem Arretierelement (54) zum Arretieren der Scheibe (34,52), das an einem Führungsteil (66) bewegbar gelagert ist, welches an einem Bauteil (26) der Windkraftanlage (10) mit Ausnahme der Scheibe (34,52) und der Welle angeordnet ist,
- wobei die Scheibe als Zahnscheibe (52) ausgebildet ist, die über zumindest einen Teil ihres Umfangrandes gezahnt ist, und
- wobei das Arretierelement (54) ein der Zahnscheibe (52) zugewandtes Ende mit mindestens einem Vorsprung (60) zum Eintauchen zwischen zwei Zähne (50) der Zahnscheibe (52) aufweist.

2. Vorrichtung nach Anspruch 1, **dadurch gekennzeichnet, dass** die Zähne (50) der Zahnscheibe (52) im wesentlich radial von dieser abstehen und dass das Arretierelement (54) in radialer Richtung auf die Zahnscheibe (52) zu und von dieser weg bewegbar ist.

3. Vorrichtung nach Anspruch 1, **dadurch gekennzeichnet, dass** die Zähne (50) der Zahnscheibe (52) unter einem spitzen Winkel zur Radialerstreckung der Zahnscheibe (52), insbesondere axial von der Zahnscheibe (50) abstehen und dass das Arretierelement (54) unter einem spitzen Winkel und insbesondere axial auf die Zahnscheibe (52) zu und von dieser weg bewegbar ist.

4. Vorrichtung nach einem der Ansprüche 1 bis 3, **dadurch gekennzeichnet, dass** der mindestens eine Vorsprung (60) des Arretierelements (54) nach Art eines Zahns zum Kämmen mit der Zahnscheibe (52) ausgebildet ist.

5. Vorrichtung nach einem der Ansprüche 1 bis 4, **dadurch gekennzeichnet, dass** das Arretierelement (54) mindestens zwei nach Art von Zähnen ausgebildete Vorsprünge (60) zum Kämmen mit der Zahnscheibe (52) aufweist.

6. Vorrichtung nach einem der Ansprüche 1 bis 5, **dadurch gekennzeichnet, dass** das Arretierelement (54) in einer Arretierungsposition, in der der mindestens eine Vorsprung (60) zwischen zwei Zähne (50) der Zahnscheibe (52) eingetaucht ist, und einer Freigabeposition gegen unbeabsichtigte Bewegungen festlegbar ist.

7. Vorrichtung nach einem der Ansprüche 1 bis 6, **dadurch gekennzeichnet, dass** das Arretierelement (54) durch Drehen einer Handkurbel (74) verschiebbar ist.

8. Vorrichtung nach einem der Ansprüche 1 bis 7, **dadurch gekennzeichnet, dass** das Arretierelement (54) in dem Führungsteil (66) linear geführt ist.

9. Vorrichtung nach einem der Ansprüche 1 bis 8, **dadurch gekennzeichnet, dass** die Zahnscheibe (52) an einer ein Getriebe (26) mit einem Generator (30) verbindenden Welle (28) der Windkraftanlage anbringbar ist.

10. Vorrichtung nach Anspruch 9, **dadurch gekennzeichnet, dass** das Arretierelement (54) an dem Getriebe (26) und/oder einem am Getriebe (26) anbringbaren Montageelement (62) bewegbar angeordnet ist.

11. Vorrichtung nach einem der Ansprüche 1 bis 10, **dadurch gekennzeichnet, dass** die Zahnscheibe (52) auch als Bremsscheibe (34) einer Feststell-Scheibenbremse (32) der Windkraftanlage ausgebildet ist.

## Claims

1. A device for locking a rotor-driven shaft of a wind turbine, the device having
- a disc, which is connectable to the shaft, and
- a locking element (54) for locking the disc (34, 52), the element being movably arranged on a guide member (66), which is arranged on a part (26) of the wind turbine (10) which is different than either the disc (34, 52) or the shaft,
- wherein the disc a toothed disc (52), which is serrated over at least a portion of its peripheral edge, and
- wherein the locking element (54) has an end facing the toothed disc (52), said end having at least one projection (60) for meshing with two teeth (50) of the toothed disc (52).

2. The device according to claim 1, **characterized in that** the teeth (50) of the toothed disc (52) protrude essentially radially therefrom and that the locking element (54) is movable in the radial direction towards and away from toothed disc (52).

3. The device according to claim 1, **characterized in that** the teeth (50) of the toothed disc (52) protrude from the toothed disc (52) at an acute angle to the radial extension of the toothed disc (52), in particular axially from the toothed disc (50), and that the locking element (54) is movable at an acute angle, and in particular axially, towards and away from the toothed disc (52).

4. The device according to any of claims 1 to 3, **characterized in that** the at least one protrusion (60) of the locking element (54) is provided in the manner of a tooth for meshing with the toothed disc (52).

5. The device according to any of claims 1 to 4, **characterized in that** the locking element (54) has at least two tooth-like protrusions (60) for meshing with the toothed disc (52).

6. The device according to any of claims 1 to 5, **characterized in that** the locking element (54) can be fixed in a locking position in which the at least one protrusion (60) meshes between two teeth (50) of the toothed disc (52), and in a release position against unintended movements.

7. The device according to any of claims 1 to 6, **characterized in that** the locking element (54) is displaceable by turning a hand crank (74).

8. The device according to any of claims 1 to 7, **characterized in that** the locking element (54) is linearly guided in the guide member (66).

9. The device according to any of claims 1 to 8, **characterized in that** the toothed disc (52) can be attached to a shaft (28), which connects a gear box (26) with a generator (30) of the wind turbine.

10. The device according to claim 9, **characterized in that** the locking element (54) is movably connected to the gear box (26) and/or a mounting element (62) attachable to the gear box (26).

11. The device according to any of claims 1 to 10, **characterized in that** the toothed disc (52) is also provided as brake disc (34) of a locking disc brake (32) of the wind turbine.

## Revendications

1. Dispositif pour le blocage d'un arbre d'éolienne entraîné par un rotor, comprenant
- un disque qui est apte à être relié à l'arbre, et
- un élément de blocage (54) pour le blocage du disque (34, 52) qui est logé de manière déplaçable au niveau d'une pièce de guidage (66), laquelle est disposée au niveau d'un composant (26) de l'éolienne (10) à l'exception du disque (34, 52) et de l'arbre,
- sachant que le disque est constitué comme disque denté (52) qui est denté sur au moins une partie de son bord périphérique, et
- sachant que l'élément de blocage (54) présente une extrémité tournée vers le disque denté (52), comprenant au moins une saillie (60) pour s'enfoncer entre deux dents (50) du disque denté (52).

2. Dispositif selon la revendication 1, **caractérisé en ce que** les dents (50) du disque denté (52) dépassent de celui-ci de manière sensiblement radiale et **en ce que** l'élément de blocage (54) est déplaçable en sens radial en direction du disque denté (52) et en éloignement de celui-ci.

3. Dispositif selon la revendication 1, **caractérisé en ce que** les dents (50) du disque denté (52) dépassent du disque denté (50) selon un angle aigu par rapport à l'extension radiale du disque denté (52), en particulier axialement, et **en ce que** l'élément de blocage (54) est déplaçable selon un angle aigu et en particulier axialement en direction du disque denté (52) et en éloignement de celui-ci.

4. Dispositif selon l'une des revendications 1 à 3, **caractérisé en ce que** l'au moins une saillie (60) de l'élément de blocage (54) est constitué à la façon d'une dent pour l'engrenage avec le disque denté (52).

5. Dispositif selon l'une des revendications 1 à 4, **caractérisé en ce que** l'élément de blocage (54) présente au moins deux saillies (60) constituées à la façon de dents pour l'engrenage avec le disque denté (52).

6. Dispositif selon l'une des revendications 1 à 5, **caractérisé en ce que** l'élément de blocage (54) peut être assuré contre des mouvements inopinés dans une position de blocage dans laquelle l'au moins une saillie (60) est enfoncée entre deux dents (50) du disque denté (52), et dans une position de libération.

7. Dispositif selon l'une des revendications 1 à 6, **caractérisé en ce que** l'élément de blocage (54) est apte à être translaté par rotation d'une manivelle (74).

8. Dispositif selon l'une des revendications 1 à 7, **caractérisé en ce que** l'élément de blocage (54) est guidé linéairement dans la pièce de guidage (66).

9. Dispositif selon l'une des revendications 1 à 8, **caractérisé en ce que** le disque denté (52) est apte à être apposé au niveau d'un arbre (28) de l'éolienne reliant une boîte de transmission (26) à un générateur (30).

10. Dispositif selon la revendication 9, **caractérisé en ce que** l'élément de blocage (54) est disposé de façon déplaçable au niveau de la boîte de transmission (26) et/ou d'un élément de montage (62) apte à être apposé au niveau de la boîte de transmission (26).

11. Dispositif selon l'une des revendications 1 à 10, **caractérisé en ce que** le disque denté (52) est aussi constitué comme disque de frein (34) d'un frein à disque d'arrêt (32) de l'éolienne.
